(19) Europäisches Patentamt
European Patent Office
Office européen des brevets

(11) **EP 3 561 740 A1**

(12) **EUROPEAN PATENT APPLICATION**
published in accordance with Art. 153(4) EPC

(43) Date of publication:
**30.10.2019 Bulletin 2019/44**

(51) Int Cl.:
**G06N 99/00** (2019.01)

(21) Application number: **17888369.0**

(22) Date of filing: **14.12.2017**

(86) International application number:
**PCT/JP2017/044839**

(87) International publication number:
**WO 2018/123606 (05.07.2018 Gazette 2018/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **26.12.2016 JP 2016251901**

(71) Applicant: **Sony Corporation
Tokyo 108-0075 (JP)**

(72) Inventors:
• **NAKADA Kento**
  **Tokyo 108-0075 (JP)**
• **NARIHIRA Takuya**
  **Tokyo 108-0075 (JP)**
• **SUZUKI Hirotaka**
  **Tokyo 108-0075 (JP)**
• **OSATO Akihito**
  **Tokyo 108-0075 (JP)**

(74) Representative: **MFG Patentanwälte
Meyer-Wildhagen Meggle-Freund
Gerhard PartG mbB
Amalienstraße 62
80799 München (DE)**

(54) **LEARNING DEVICE AND LEARNING METHOD**

(57)    The present disclosure relates to a learning apparatus and a learning method that allow a reinforcement learning model to be easily corrected on the basis of user input.

A display control section causes a display section to display reinforcement learning model information regarding a reinforcement learning model. A correcting section corrects the reinforcement learning model on the basis of user input to the reinforcement learning model information. The present disclosure can be applied to, for example, a personal computer (PC) and the like that correct a reinforcement learning model on the basis of input from a user and perform reinforcement learning of a movement policy of an agent using the corrected reinforcement learning model.

F I G . 1

**EP 3 561 740 A1**

**Description**

[Technical Field]

The present disclosure relates to a learning apparatus and a learning method, and particularly relates to a learning apparatus and a learning method that allow a reinforcement learning model to be easily corrected on the basis of user input.

[Background Art]

There are reinforcement learning models that learn, when an agent, an environment, an action, and a reward are given, a policy for maximizing the reward (see NPL 1, for example).

[Citation List]

[Non Patent Literature]

[NPL 1]
"Maximum Entropy Inverse Reinforcement Learning," Brian D. Ziebart, Andrew Maas, J.Andrew Bagnell, and Anind K. Dey, the Association for the Advancement of Artificial Intelligence (AAAI), 2008.7.13

[Summary]

[Technical Problem]

However, making a reinforcement learning model corrected easily on the basis of user input has not been devised.
The present disclosure has been made in view of the foregoing situation and allows a reinforcement learning model to be easily corrected on the basis of user input.

[Solution to Problem]

A learning apparatus according to one aspect of the present disclosure includes: a display control section configured to cause a display section to display reinforcement learning model information regarding a reinforcement learning model; and a correcting section configured to correct the reinforcement learning model on a basis of user input to the reinforcement learning model information.
A learning method according to one aspect of the present disclosure corresponds to a learning apparatus according to one aspect of the present disclosure.
According to one aspect of the present disclosure, reinforcement learning model information regarding a reinforcement learning model is displayed on a display section, and the reinforcement learning model is corrected on the basis of user input to the reinforcement learning model information.
It is noted that the learning apparatus according to the first aspect of the present disclosure can be implemented by causing a computer to execute a program.
Further, in order to implement the learning apparatus according to the first aspect of the present disclosure, the program to be executed by the computer can be provided by transmitting the program via a transmission medium or by recording the program on a recording medium.

[Advantageous Effect of Invention]

According to one aspect of the present disclosure, a reinforcement learning model can be easily corrected on the basis of user input.
It is noted that the effects described herein are not necessarily limitative, and any of the effects described in the present disclosure may be provided.

[Brief Description of Drawings]

[FIG. 1]

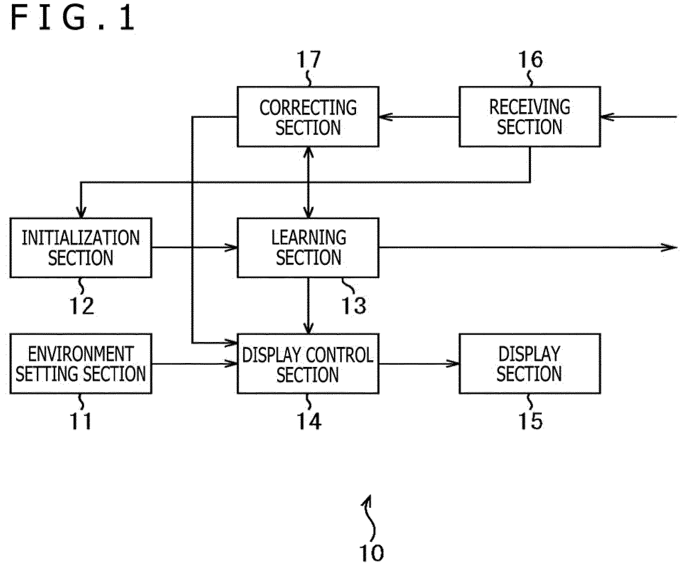

FIG. 1 is a block diagram depicting an example of a configuration of a first embodiment of a PC as a learning apparatus to which the present disclosure is applied.
[FIG. 2]

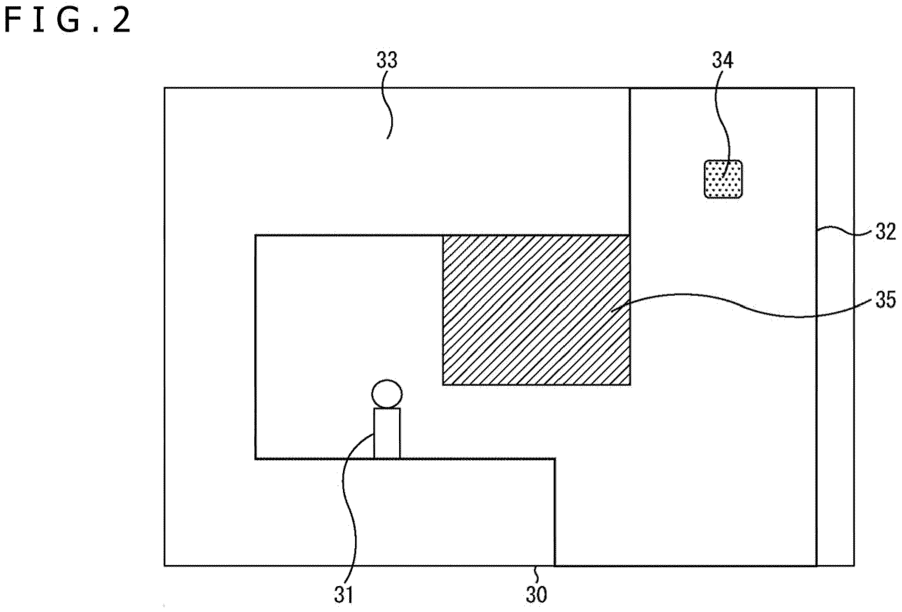

FIG. 2 is a diagram for describing an environment map.
[FIG. 3]

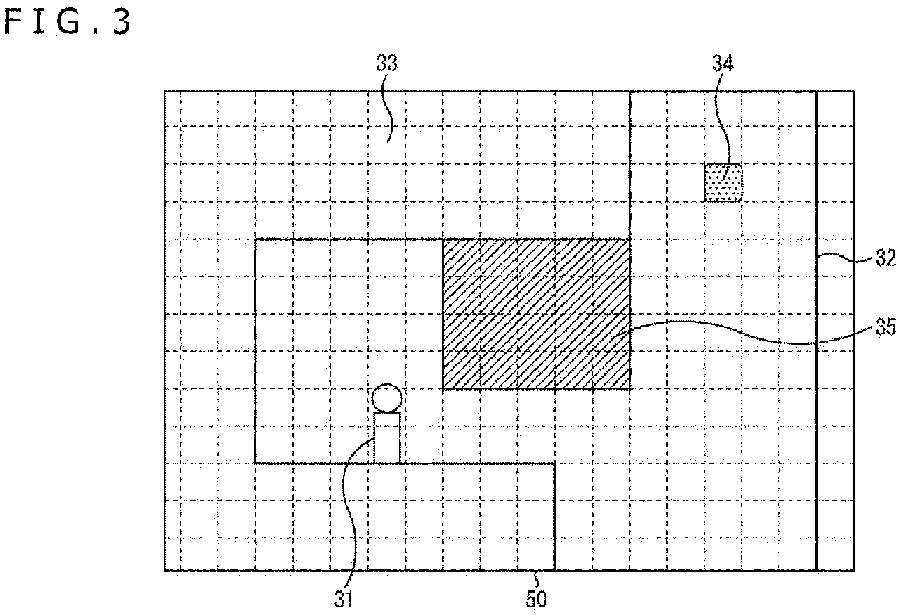

FIG. 3 is another diagram for describing the environment map.
[FIG. 4]

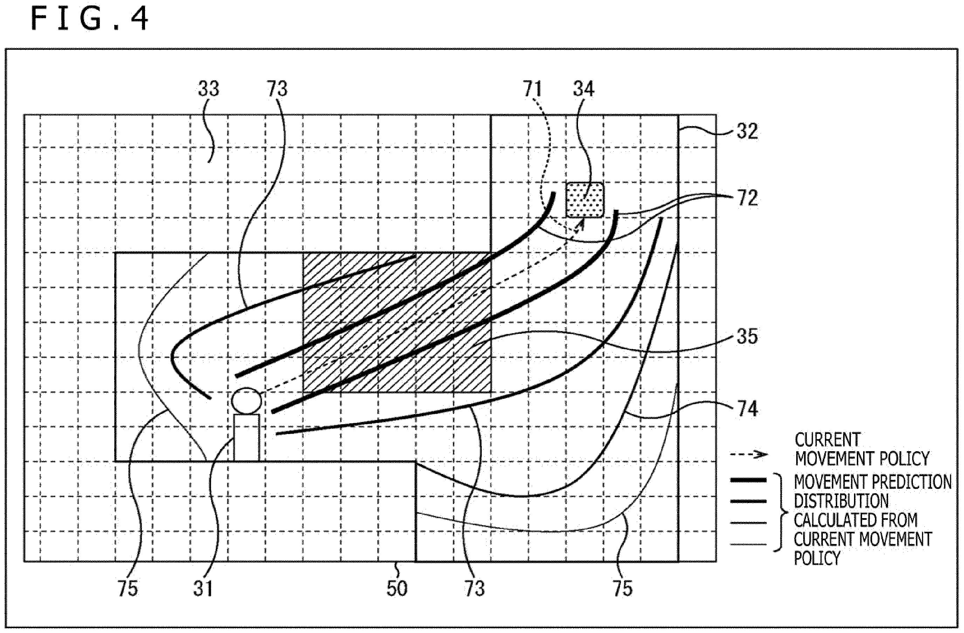

FIG. 4 is a diagram depicting an example of the environment map on which policy information has been superimposed.
[FIG. 5]

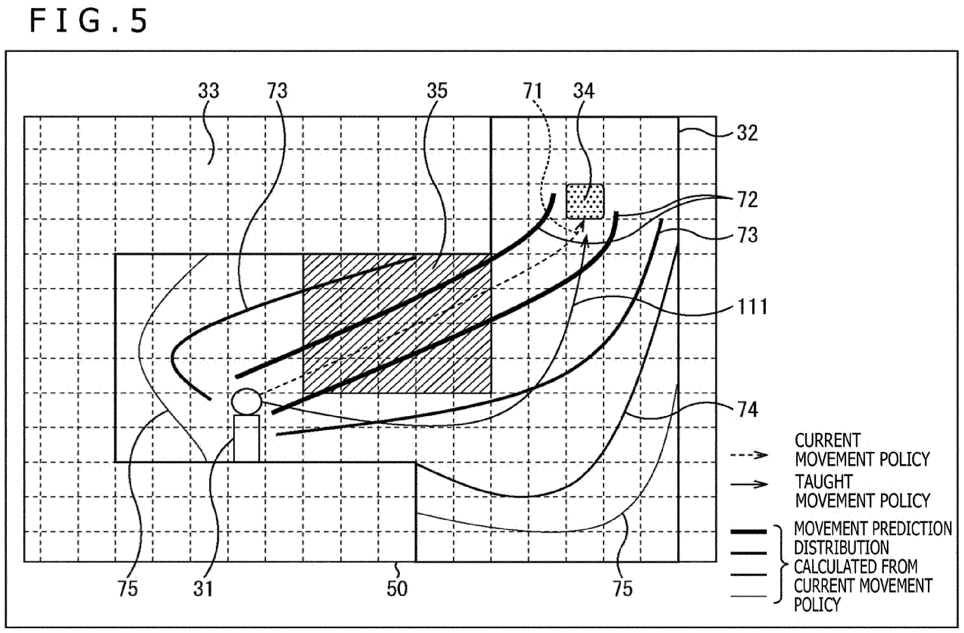

FIG. 5 is a diagram for describing a first method of teaching a movement policy.
[FIG. 6]

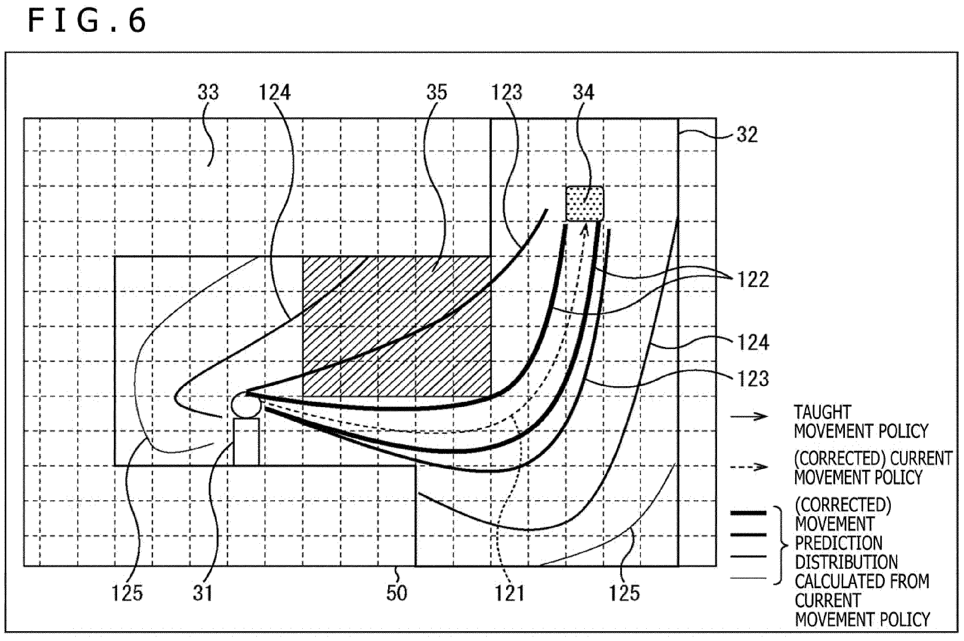

FIG. 6 is another diagram for describing the first method of teaching the movement policy.
[FIG. 7]

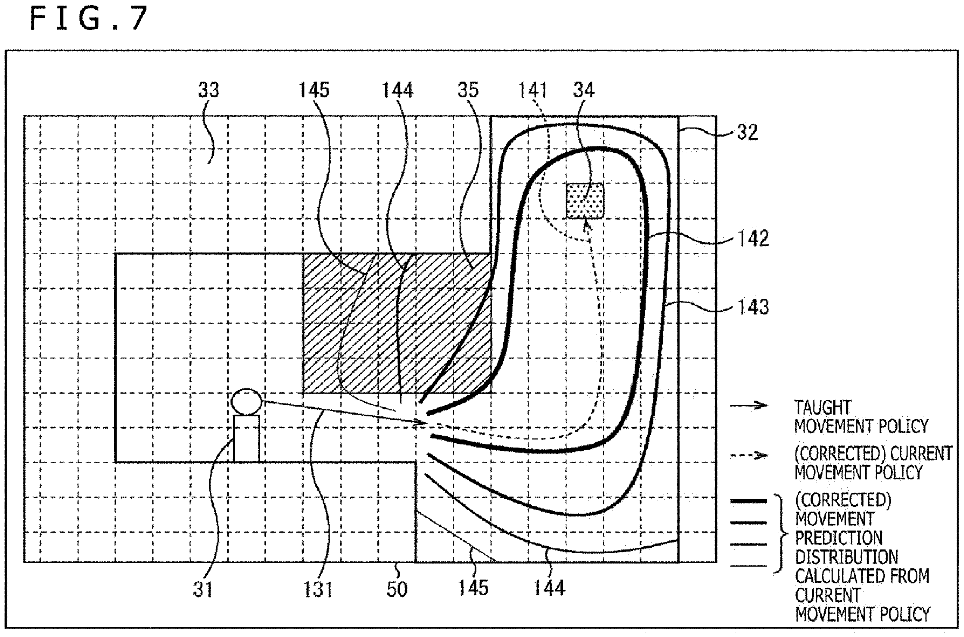

FIG. 7 is a diagram for describing a second method of teaching a movement policy.
[FIG. 8]

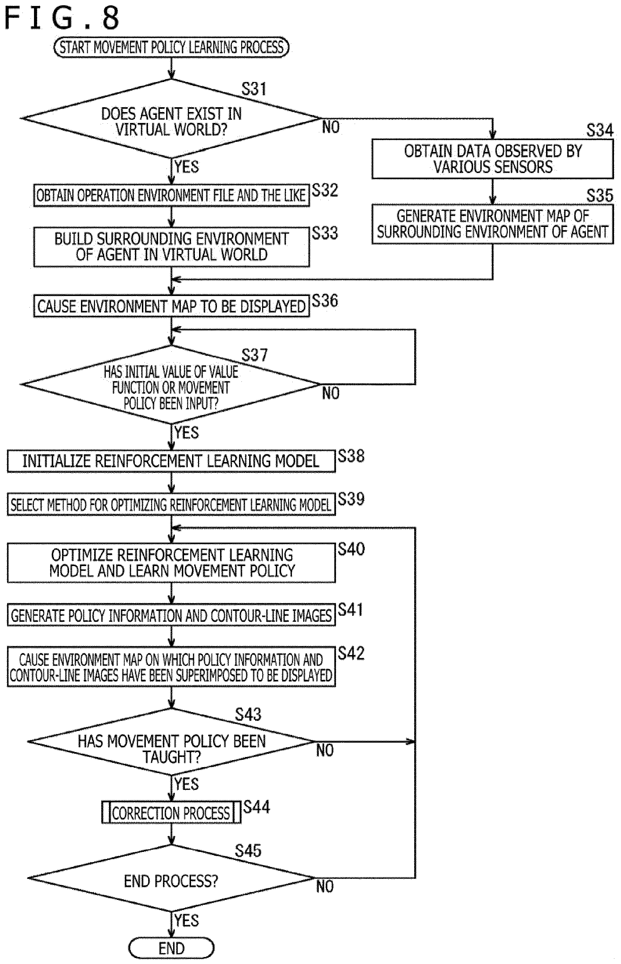

FIG. 8 is a flowchart for describing a movement policy learning process of the PC in FIG. 1.
[FIG. 9]

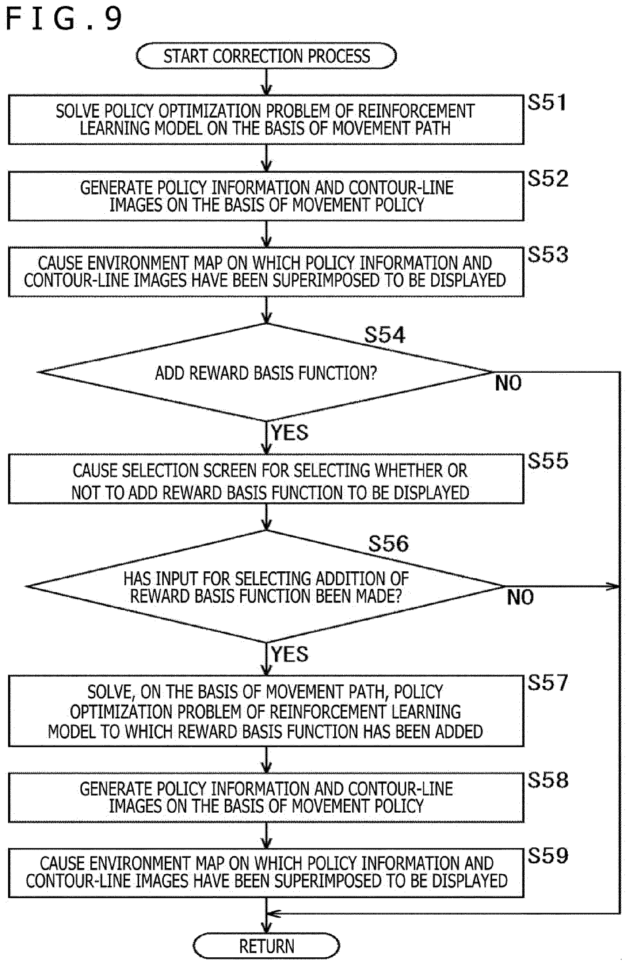

FIG. 9 is a flowchart for describing a correction process in FIG. 8.
[FIG. 10]

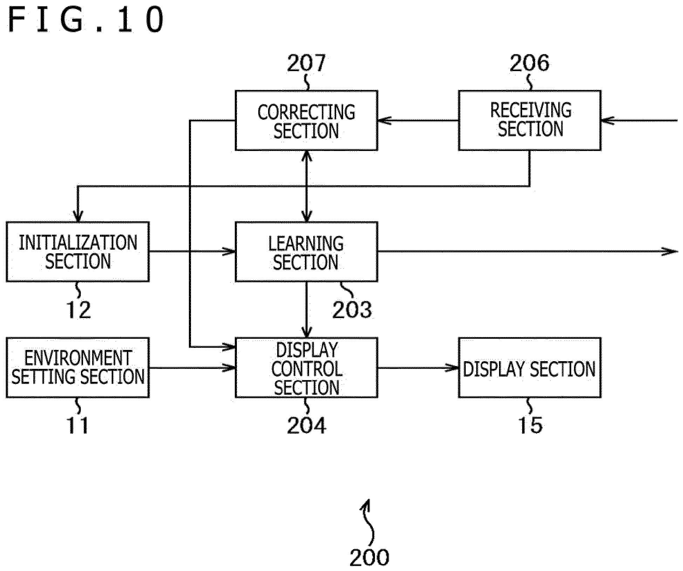

FIG. 10 is a block diagram depicting an example of a configuration of a second embodiment of a PC as a learning apparatus to which the present disclosure is applied.
[FIG. 11]

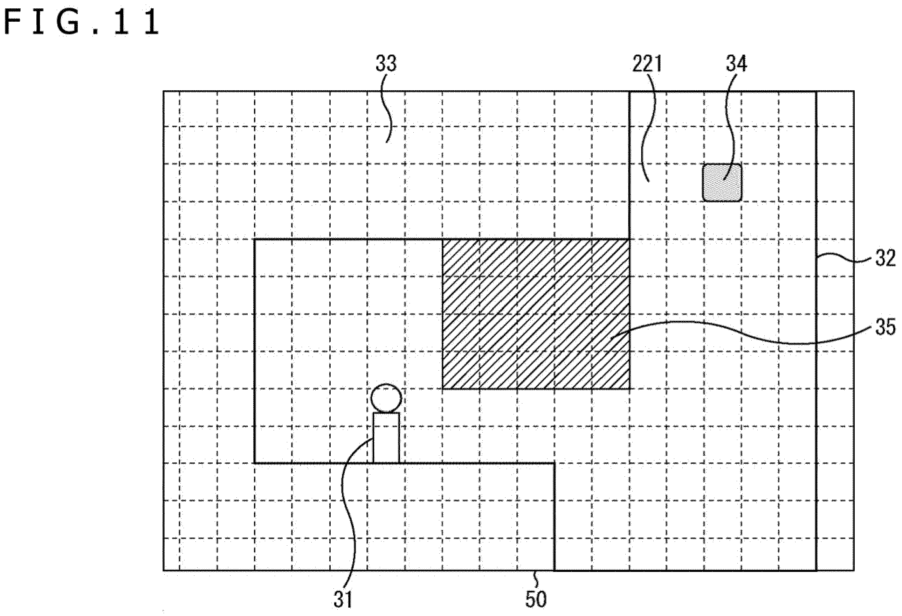

FIG. 11 is a diagram depicting an example of an environment map on which reward function information has been superimposed.
[FIG. 12]

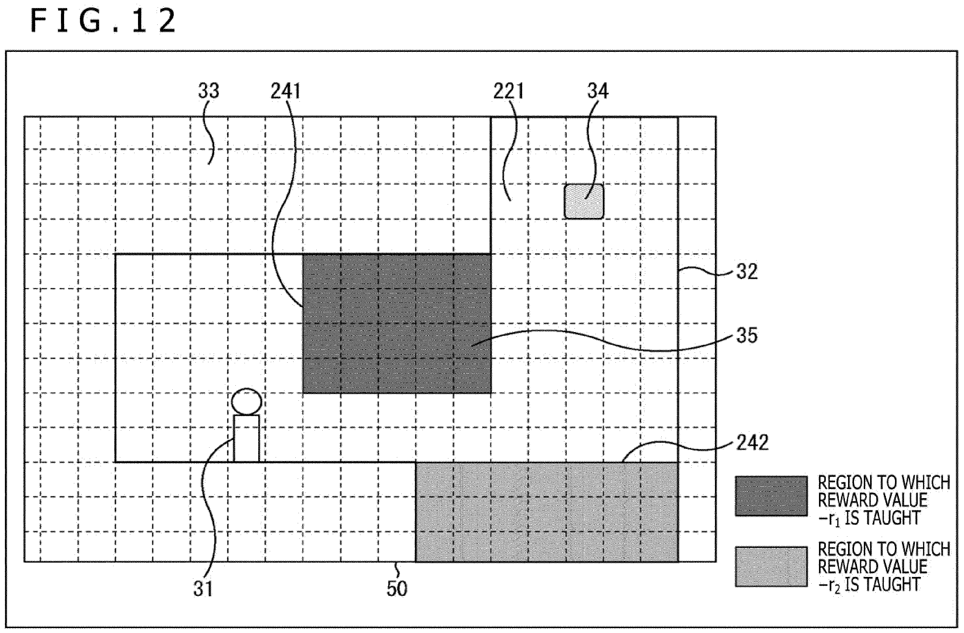

FIG. 12 is a diagram for describing a method of teaching a reward function.
[FIG. 13]

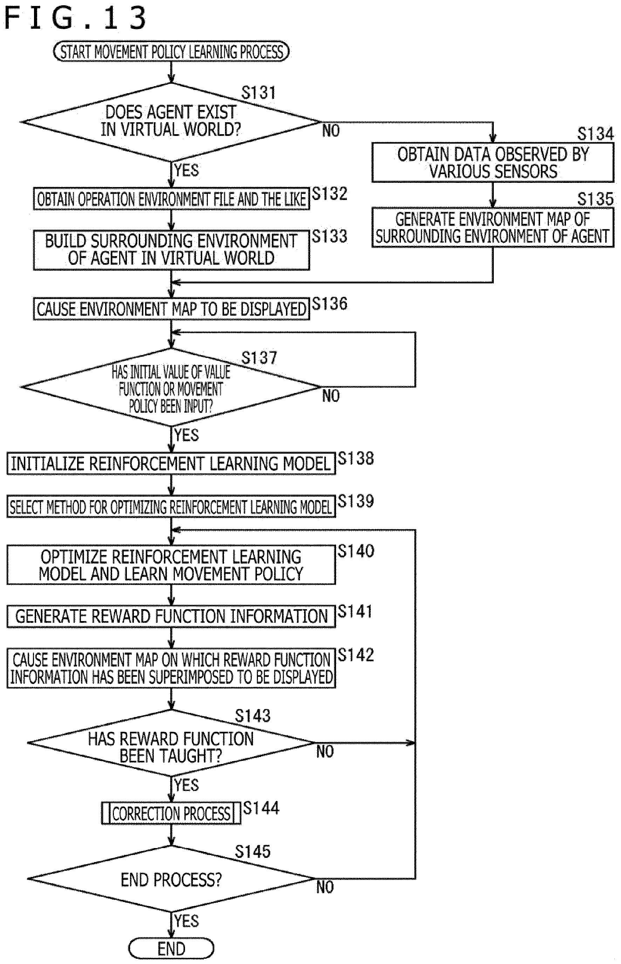

FIG. 13 is a flowchart for describing a movement policy learning process of the PC in FIG. 10.
[FIG. 14]

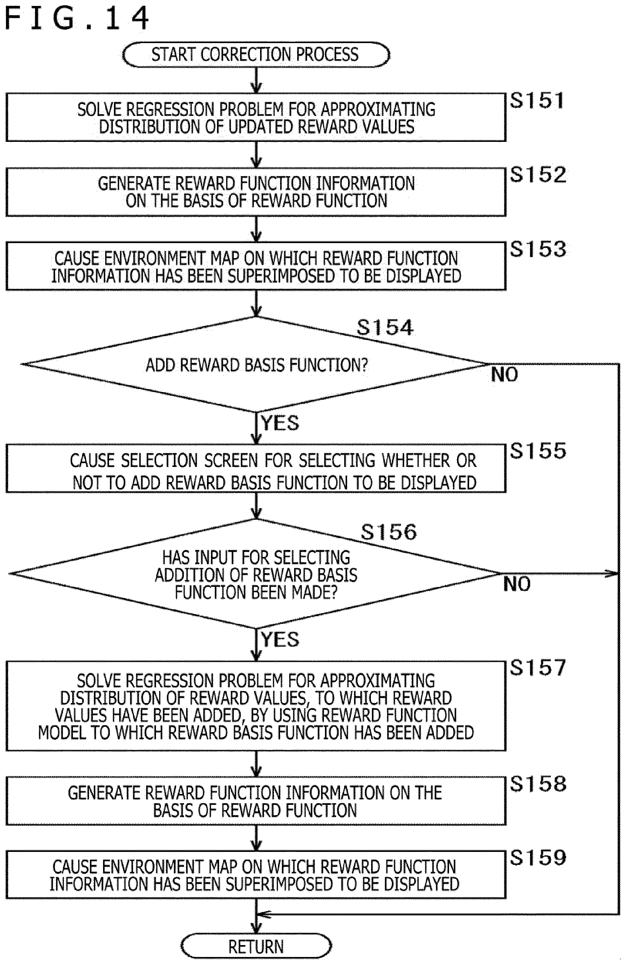

FIG. 14 is a flowchart for describing a correction process in FIG. 13.
[FIG. 15]

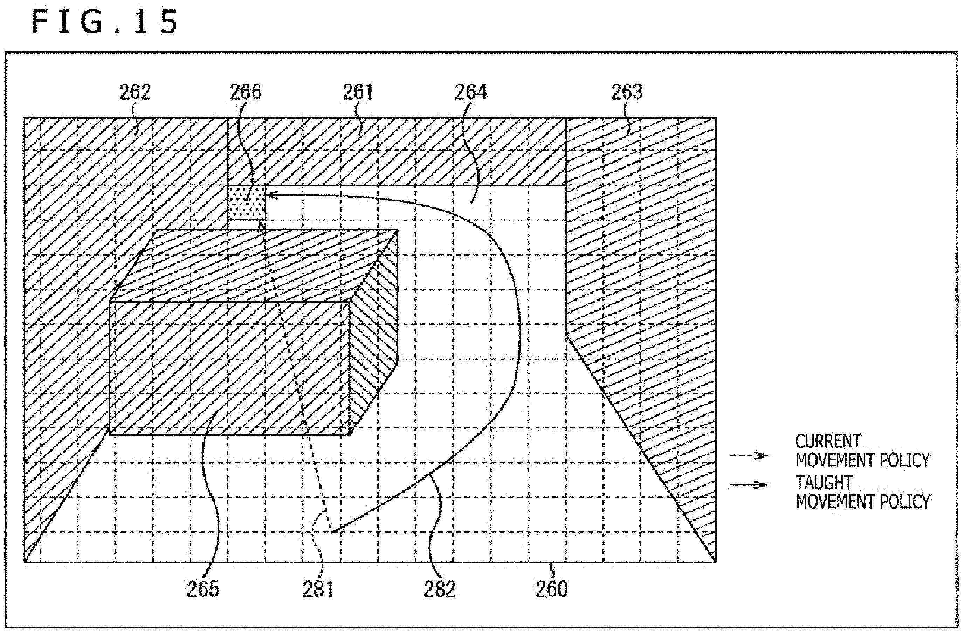

FIG. 15 is a diagram depicting another example of an environment map on which policy information of a movement policy has been superimposed.
[FIG. 16]

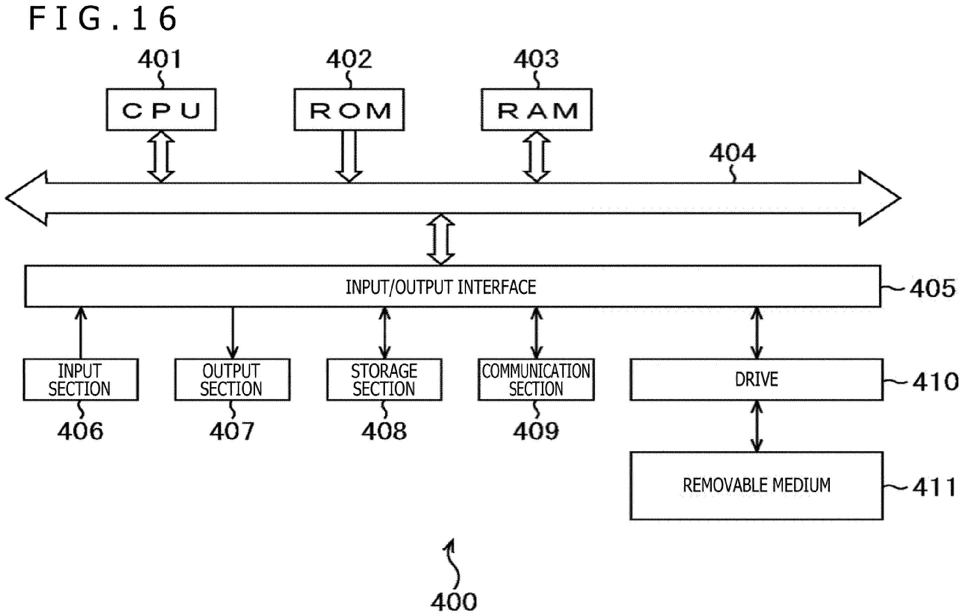

FIG. 16 is a block diagram depicting an example of a configuration of hardware of a computer.

[Description of Embodiments]

Hereinafter, modes for carrying out the present disclosure (hereinafter referred to as embodiments) will be described. It is noted that description will be given in the following order.

1. First Embodiment: Personal Computer (PC) (FIGS. 1 to 9)
2. Second Embodiment: Personal Computer (PC) (FIGS. 10 to 14)
3. Third Embodiment: VR (Virtual Reality) device (FIG. 15)
4. Fourth Embodiment: Computer (FIG. 16)

<First Embodiment>

(Example of Configuration of First Embodiment of PC)

FIG. 1 is a block diagram depicting an example of a configuration according to the first embodiment of a PC as a learning apparatus to which the present disclosure is applied.
A PC 10 in FIG. 1 includes an environment setting section 11, an initialization section 12, a learning section 13, a display control section 14, a display section 15, a receiving section 16, and a correcting section 17. The PC 10 includes a computer, for example, and performs reinforcement learning of a movement policy of an agent.
Specifically, in a case where the agent exists in a virtual world such as a simulation, the environment setting section 11 of the PC 10 builds a surrounding environment of the agent in the virtual world on the basis of an operation environment file and the like of the agent. Then, the environment setting section 11 generates an environment map (environment information). The environment map is a GUI (Graphical User Interface) image depicting the surrounding environment.

By contrast, in a case where the agent is a robot or the like that exists in the real world, the environment setting section 11 generates an environment map of a surrounding environment of the agent on the basis of data observed by various sensors of the agent in the real world. The environment setting section 11 supplies the generated environment map to the display control section 14.

On the basis of an initial value of a value function or a movement policy supplied from the receiving section 16, the initialization section 12 initializes a reinforcement learning model that learns the movement policy of the agent. At this time, an initial value of a reward function used for the reinforcement learning model is also set. Here, although a reward function model is assumed to be a linear basis function model that performs a weighted addition on a predetermined reward basis function group selected from a reward basis function group registered in advance, the reward function model is not limited thereto. The initialization section 12 supplies the initialized reinforcement learning model to the learning section 13.

The learning section 13 optimizes the reinforcement learning model supplied from the initialization section 12 or the correcting section 17, and learns the movement policy on the basis of the optimized reinforcement learning model. The learning section 13 supplies the optimized reinforcement learning model to the correcting section 17 and supplies the learned movement policy to the display control section 14. Further, the learning section 13 outputs a final learning result of the movement policy. In addition, the learning section 13 holds the learned movement policy if necessary.

The display control section 14 supplies the environment map supplied from the environment setting section 11 to the display section 15 and causes the display section 15 to display the environment map. Further, the display control section 14 generates policy information and the like as reinforcement learning model information regarding the reinforcement learning model. The policy information is a GUI image depicting the movement policy supplied from the learning section 13 or the correcting section 17. The display control section 14 superimposes the policy information and the like on the environment map. The display control section 14 supplies the policy information and the like superimposed on the environment map to the display section 15 and causes the display section 15 to display the policy information and the like superimposed on the environment map. In addition, the display control section 14 generates, if necessary, a selection screen for selecting whether or not to add a reward basis function. The display control section 14 supplies the selection screen to the display section 15 and causes the display section 15 to display the selection screen.

The receiving section 16 receives input from the user. For example, the receiving section 16 receives the initial value of the value function or the movement policy input from the user, and supplies the initial value of the value function or the movement policy to the initialization section 12. Further, the receiving section 16 receives, from the user who has seen the policy information and the like displayed on the display section 15, input of a movement path as indirect teaching of the movement policy with respect to the policy information, and supplies the movement path to the correcting section 17.

The correcting section 17 corrects the reinforcement learning model supplied from the learning section 13 so as to optimize the movement policy on the basis of the movement path supplied from the receiving section 16 according to various inverse reinforcement learning methods. At this time, the correcting section 17 adds the reward basis function of the reinforcement learning model if necessary. The method described in NPL 1 can be used as an inverse reinforcement learning method, for example.

When the surrounding environment of the agent is assumed to be M and the movement path supplied from the receiving section 16 is assumed to be $Z_E(s, a)$, for example, optimization of a movement policy $\pi$ is defined by the following equation (1).

[Math. 1]

$$\pi^* = \arg\max_{\pi} P(Z_E | \pi, M) \qquad \cdots (1)$$

It is noted that s represents a state of the agent such as the position of the agent, a represents an action of the agent, and P represents a probability.

In general, there are many movement policies n* that satisfy the equation (1) described above, and there are various problem setting methods to constrain the movement policies n* to one. In any of the problem setting methods, the reward function is also indirectly corrected while the movement policy n is being optimized. The correcting section 17 supplies the corrected reinforcement learning model to the learning section 13 and supplies the optimized movement policy to the display control section 14.

(Description of Environment Map)

FIGS. 2 and 3 are diagrams for describing the environment map.

In the examples in FIGS. 2 and 3, a region 32 and a region 33 exist around an agent 31. The agent 31 is movable in the region 32, while the agent 31 is not movable in the region 33. In the movable region 32, a goal 34 and an obstacle 35 exist. A positive reward value is set in the goal 34. The obstacle 35 is an obstacle to the movement.

First, in this case, as depicted in FIG. 2, the environment setting section 11 generates a GUI image 30 that depicts a surrounding environment in two dimensions. The surrounding environment includes the agent 31, the region 32, the region 33, the goal 34, and the obstacle 35. Next, the environment setting section 11 divides the GUI image 30 into grids (lattice points) on the basis of a rectangular coordinate system of the reinforcement learning model and generates an environment map 50. Each of these grids serves as a unit of the reward function or probability density distribution of the reinforcement learning model.

(Example of Environment Map on which Policy Information Has Been Superimposed)

FIG. 4 is a diagram depicting an example of the environment map on which policy information of a movement policy has been superimposed. The movement policy has been learned by the reinforcement learning model before correction by the correcting section 17.

As depicted in FIG. 4, in a case where the environment map 50 in FIG. 3 has been generated, the display control section 14 generates policy information 71. Using an arrow, the policy information 71 indicates a movement path based on the movement policy from the current position of the agent 31 to the goal 34. The movement policy has been learned by the reinforcement learning model before correction by the correcting section 17.

Further, the display control section 14 calculates, from the movement policy supplied from the learning section 13, probability density distribution (movement prediction distribution) of the agent 31 reaching the goal 34 in a case where the agent 31 exists in each grid. Then, the display control section 14 generates contour-line images 72 to 75. The contour-line images 72 to 75 are GUI images of contour lines of the probabilities of the movement prediction distribution. It is noted that the probabilities of the movement prediction distribution are high in order of the contour-line images 72, 73, 74, and 75.

The display control section 14 superimposes the policy information 71 and the contour-line images 72 to 75 generated as described above on the environment map 50 and causes the display section 15 to display the policy information 71 and the contour-line images 72 to 75 superimposed on the environment map 50.

It is noted that, although the obstacle 35 is an obstacle to the movement, there is a possibility that as depicted in FIG. 4, the movement path based on the movement policy learned by the reinforcement learning model before correction is a path that passes through the obstacle 35 since the obstacle 35 exists in the movable region 32. Further, the contour-line images 72 to 75 do not need to be superimposed on the environment map 50.

(Description of First Method of Teaching Movement Policy)

FIGS. 5 and 6 are diagrams for describing a first method of teaching a movement policy with respect to the policy information 71 in FIG. 4.

In a case where the policy information 71 and the contour-line images 72 to 75 have been superimposed on the environment map 50 as depicted in FIG. 4, the user inputs a movement path 111. The movement path 111 extends from the current position of the agent 31 to the goal 34 without passing through the obstacle 35, as depicted in FIG. 5, for example. In this manner, the user teaches a movement policy corresponding to the movement path 111 as a desired movement policy.

In this case, the correcting section 17 corrects the reinforcement learning model so as to optimize the movement policy on the basis of the movement path 111, and supplies the optimized movement policy to the display control section 14. The display control section 14 generates policy information 121. Using an arrow, the policy information 121 indicates the movement path based on the movement policy supplied from the correcting section 17. Further, the display control section 14 calculates movement prediction distribution from the movement policy and generates contour-line images 122 to 125 of the probabilities of the movement prediction distribution. Then, as depicted in FIG. 6, the display control section 14 superimposes the policy information 121 and the contour-line images 122 to 125 on the environment map 50 and causes the display section 15 to display the policy information 121 and the contour-line images 122 to 125 superimposed on the environment map 50. It is noted that the probabilities of the movement prediction distribution are high in order of the contour-line images 122, 123, 124, and 125.

(Description of Second Method of Teaching Movement Policy)

FIG. 7 is a diagram for describing a second method of teaching a movement policy with respect to the policy information 71 in FIG. 4.

As depicted in FIG. 4, in a case where the policy information 71 and the contour-line images 72 to 75 have been superimposed on the environment map 50, the user inputs a movement path 131 as depicted in FIG. 7, for example. The movement path 131 is in the middle of the movement path extending from the current position of the agent 31 to the goal 34 without passing through the obstacle 35. In this manner, the user teaches a movement policy corresponding to the movement path 131 as a desired movement policy.

In this case, the correcting section 17 corrects the reinforcement learning model so as to optimize the movement policy corresponding to the movement path extending to the goal 34 through the movement path 131 on the basis of the movement path 131. The correcting section 17 supplies the optimized movement policy to the display control section 14. The display control section 14 generates policy information 141. Using an arrow, the policy information 141 indicates a path after the movement path 131, which is part of the movement path based on the movement policy supplied from the correcting section 17. Further, the display control section 14 calculates movement prediction distribution from the movement policy and generates contour-line images 142 to 145 of the probabilities of the movement prediction distribution.

Then, as depicted in FIG. 7, the display control section 14 superimposes the movement path 131, the policy information 141, and the contour-line images 142 to 145 on the environment map 50 and causes the display section 15 to display the movement path 131, the policy information 141, and the contour-line images 142 to 145 superimposed on the environment map 50. It is noted that the probabilities of the movement prediction distribution are high in order of the contour-line images 142, 143, 144, and 145.

Examples of a method of inputting the movement path 111 (131) include a method of inputting the locus of the movement path 111 (131) using a mouse, not depicted, a method of inputting the coordinates of a grid on the movement path, and the like.

(Description of Processes of PC)

FIG. 8 is a flowchart for describing a movement policy learning process of the PC 10 in FIG. 1.

In step S31 in FIG. 8, the environment setting section 11 of the PC 10 determines whether or not the agent exists in a virtual world. In a case where it has been determined in step S31 that the agent exists in the virtual world, the environment setting section 11 obtains an operation environment file and the like of the agent in step S32.

In step S33, the environment setting section 11 builds a surrounding environment of the agent in the virtual world on the basis of the operation environment file and the like of the agent that have been obtained in step S32, and generates an environment map of the surrounding environment. Then, the environment setting section 11 supplies the generated environment map to the display control section 14 and causes the process to proceed to step S36.

On the other hand, in a case where it has been determined in step S31 that the agent does not exist in the virtual world, that is, in a case where the agent exists in the real world, the process proceeds to step S34. In step S34, the environment setting section 11 obtains data observed by various sensors of the agent in the real world.

In step S35, the environment setting section 11 generates an environment map of the surrounding environment of the agent on the basis of the data obtained in step S34, supplies the environment map to the display control section 14, and causes the process to proceed to step S36.

In step S36, the display control section 14 supplies the environment map supplied from the environment setting section 11 to the display section 15 and causes the display section 15 to display the environment map.

In step S37, the receiving section 16 determines whether or not an initial value of a value function or a movement policy has been input. In a case where it has been determined in step S37 that the initial value of the value function or the movement policy has not been input yet, the receiving section 16 stands by until the initial value of the value function or the movement policy is input.

On the other hand, in a case where it has been determined in step S37 that the initial value of the value function or the movement policy has been input, the receiving section 16 receives the initial value of the value function or the policy input from the user and supplies the initial value of the value function or the policy to the initialization section 12. Then, in step S38, the initialization section 12 initializes the reinforcement learning model on the basis of the value function or the movement policy supplied from the receiving section 16. The initialization section 12 supplies the initialized reinforcement learning model to the learning section 13.

In step S39, the learning section 13 selects a method for optimizing the reinforcement learning model according to input from the user or the like. Examples of the optimization method include an MDP (Markov decision process) and the like.

In step S40, the learning section 13 optimizes (searches) the reinforcement learning model supplied from the initialization section 12 or the correcting section 17 according to the optimization method selected in step S39, and learns (improves) the movement policy on the basis of the optimized reinforcement learning model. The learning section 13 supplies the optimized reinforcement learning model to the correcting section 17. The learning section 13 supplies the learned movement policy to the display control section 14.

In step S41, the display control section 14 generates policy information and contour-line images on the basis of the movement policy supplied from the learning section 13, and superimposes the policy information and the contour-line images on the environment map.

In step S42, the display control section 14 supplies the environment map on which the policy information and the contour-line images have been superimposed to the display section 15, and causes the display section 15 to display the environment map.

In step S43, the receiving section 16 determines whether or not the user who has seen the policy information and the like displayed on the display section 15 has taught a movement policy with respect to the policy information. In a case where it has been determined in step S43 that the movement policy has been taught, the receiving section 16 receives input of a movement path as teaching of the movement policy, supplies the movement path to the correcting section 17, and causes the process to proceed to step S44.

In step S44, the correcting section 17 performs a correction process of correcting the reinforcement learning model supplied from the learning section 13 on the basis of the movement path supplied from the receiving section 16. The details of this correction process will be described with reference to FIG. 9 described later.

In step S45, the PC 10 determines whether or not to end the process. For example, in a case where the reinforcement learning model has converged or in a case where the user has given an end instruction, the PC 10 determines to end the process in step S45. Then, the learning section 13 outputs the current movement policy as a final learning result and ends the process.

On the other hand, in a case where the reinforcement learning model has not converged yet and the user has not given any end instruction, the PC 10 determines not to end the process in step S45 and returns the process to step S40.

Further, in a case where it has been determined in step S43 that the movement policy has not been taught, the process returns to step S40.

It is noted that the process in the first step S40 may be started in a case where the user has given an instruction to start optimization (search).

FIG. 9 is a flowchart for describing the correction process in step S44 in FIG. 8.

In step S51 in FIG. 9, the correcting section 17 corrects the reinforcement learning model supplied from the learning section 13 by solving a policy optimization problem of the reinforcement learning model on the basis of the movement path supplied from the receiving section 16 according to various inverse reinforcement learning methods. The correcting section 17 supplies the optimized movement policy to the display control section 14.

In step S52, the display control section 14 generates policy information and contour-line images on the basis of the movement policy supplied from the correcting section 17, and superimposes the policy information and the contour-line images on the environment map.

In step S53, the display control section 14 supplies the environment map on which the policy information and the contour-line images have been superimposed to the display section 15, and causes the display section 15 to display the environment map.

In step S54, the correcting section 17 determines whether or not to add, as a reward basis function $\varphi_{n+1}(s, a)$, a reward basis function among the reward basis function group registered in advance. The reward basis function is not any of n reward basis functions $\varphi_1(s, a)$ to $\varphi_n(s, a)$ used in the corrected reinforcement learning model.

For example, the correcting section 17 sequentially adds, as the reward basis function $\varphi_{n+1}(s, a)$, each reward basis function other than the reward basis functions $\varphi_1(s, a)$ to $\varphi_n(s, a)$ among the reward basis function group registered in advance. It is noted that the reward basis function $\varphi_i$ may be a reward basis function $\varphi_i(s)$ that depends only on a state s. On the basis of the movement path supplied from the receiving section 16, the correcting section 17 solves the policy optimization problem of the reinforcement learning model to which the reward basis function $\varphi_{n+1}(s, a)$ has been added.

As a result, in a case where there is at least one reward basis function $\varphi_{n+1}(s, a)$ whose objective function corresponding to the problem setting has been improved compared to the reinforcement learning model before addition, the correcting section 17 determines, in step S54, to add the reward basis function $\varphi_{n+1}(s, a)$ whose objective function has been improved most. On the other hand, in a case where there is no reward basis function $\varphi_{n+1}(s, a)$ whose objective function has been improved, the correcting section 17 determines in step S54 not to add any reward basis function $\varphi_{n+1}(s, a)$.

In a case where it has been determined in step S54 that the reward basis function $\varphi_{n+1}(s, a)$ is added, the display control section 14 causes the display section 15 to display the selection screen for selecting whether or not to add the reward basis function in step S55.

In step S56, the receiving section 16 determines whether or not the user who has seen the selection screen has made input for selecting addition of the basis function. In a case where it has been determined in step S56 that the input for selecting the addition of the basis function has been made, the receiving section 16 receives the input.

In step S57, similarly to the process in step S51, the correcting section 17 corrects the reinforcement learning model by solving, on the basis of the movement path supplied from the receiving section 16, the policy optimization problem of the reinforcement learning model to which the reward basis function $\varphi_{n+1}(s, a)$ has been added. The correcting section 17 supplies the corrected reinforcement learning model to the learning section 13 and supplies the optimized movement policy to the display control section 14.

Since processes in steps S58 and S59 are similar to the processes in steps S52 and S53, respectively, description will be omitted. After the process in step S59, the process returns to step S44 in FIG. 8 and proceeds to step S45.

On the other hand, in a case where it has been determined in step S54 that the reward basis function $\varphi_{n+1}(s, a)$ is not added, or in a case where it has been determined in step S56 that no input for selecting addition of the reward basis function $\varphi_{n+1}(s, a)$ has been made, the reward basis function $\varphi_{n+1}(s, a)$ is not added. Then, the correcting section 17 supplies the reinforcement learning model corrected in step S51 to the learning section 13, returns the process to step S44 in FIG. 8, and causes the process to proceed to step S45.

It is noted that, before the process in step S54, the correcting section 17 may determine whether or not the difference (distance scale) between the movement policy optimized in step S51 and the movement policy taught by the user is greater than a threshold value. In a case where the difference (distance scale) is greater than the threshold value, the correcting section 17 may cause the process to proceed to step S54. In this case, when the distance scale is equal to or less than the threshold value, the reward basis function $\varphi_{n+1}(s, a)$ is not added. The correcting section 17 supplies the reinforcement learning model corrected in step S51 to the learning section 13, returns the process to step S44 in FIG. 8, and causes the process to proceed to step S45.

As described above, the PC 10 causes the display section 15 to display the policy information. Therefore, the user can recognize the current policy by viewing the policy information displayed on the display section 15. Accordingly, while viewing the policy information, the user can intuitively teach a desired movement policy and directly and easily correct the reinforcement learning model through the GUI. That is, the user can directly and easily correct the reinforcement learning model by interacting with the PC 10. This, as a result, makes it possible to prevent the movement policy that is considered apparently inappropriate by the user from being learned. Thus, it is possible to improve the movement policy and optimize the reinforcement learning model efficiently.

<Second Embodiment>

(Example of Configuration of Second Embodiment of PC)

FIG. 10 is a block diagram depicting an example of a configuration of the second embodiment of a PC as a learning apparatus to which the present disclosure is applied.

Among components depicted in FIG. 10, the same components as the components in FIG. 1 are denoted by the same reference signs. Redundant description will be omitted as appropriate.

The configuration of a PC 200 in FIG. 10 differs from the configuration of the PC 10 in FIG. 1 in that the learning section 13, the display control section 14, the receiving section 16, and the correcting section 17 are replaced by a learning section 203, a display control section 204, a receiving section 206, and a correcting section 207, respectively. In the PC 200, the user does not directly correct a reinforcement learning model by teaching a movement policy, but indirectly corrects the reinforcement learning model by teaching a reward function.

Specifically, the learning section 203 of the PC 10 optimizes the reinforcement learning model supplied from the initialization section 12 or the correcting section 207, and learns the movement policy on the basis of the optimized reinforcement learning model. The learning section 203 supplies the optimized reinforcement learning model to the correcting section 207 and supplies the reward function (reward value distribution) in the optimized reinforcement learning model to the display control section 204. Further, the learning section 203 outputs a final learning result of the movement policy. In addition, the learning section 203 holds the learned movement policy if necessary.

The display control section 204 supplies an environment map supplied from the environment setting section 11 to the display section 15 and causes the display section 15 to display the environment map. Further, the display control section 204 generates reward function information as reinforcement learning model information. The reward function information is a GUI image depicting the reward function supplied from the learning section 203 or the correcting section 207. The display control section 204 superimposes the reward function information on the environment map. The display control section 204 supplies the reward function information superimposed on the environment map to the display section 15 and causes the display section 15 to display the reward function information superimposed on the environment map.

The receiving section 206 receives input from the user. For example, the receiving section 206 receives an initial value of a value function or the movement policy input from the user, and supplies the initial value of the value function or the movement policy to the initialization section 12. Further, the receiving section 206 receives, from the user who has seen the reward function information and the like displayed on the display section 15, input of grid-based reward values as teaching of the reward function with respect to the reward function information, and supplies the grid-based reward values to the correcting section 207.

The correcting section 207 corrects the reward function in the reinforcement learning model supplied from the learning section 203 such that the reward function approximates the grid-based reward values on the basis of the grid-based reward values supplied from the receiving section 206 according to various inverse reinforcement learning methods. At this time, the correcting section 207 adds a reward basis function of the reinforcement learning model if necessary. The method described in NPL 1 can be used as an inverse reinforcement learning method, for example.

When n reward basis functions included in the reward function are assumed to be $\varphi_i(s, a)$ ($i$ = 1, 2, ..., n) and the weight for a reward basis function $\varphi_i$ is assumed to be $w_i$, the reward function is approximated by updating the weight $w_i$ using the following equation (2) with the least squares method.
[Math. 2]

$$\mathbf{w}^* = (\lambda \mathbf{I} + \Phi^T \Phi)^{-1} \Phi \mathbf{R} \qquad \cdots (2)$$

It is noted that $R_E(s, a)$ indicates distribution of the grid-based reward values each taught in a state s and an action a. $\varphi$ represents a design matrix, I represents a unit matrix, and $\lambda$ represents a regularization parameter.

The reward function approximation method is not limited to the method using the equation (2). Further, the reward basis function $\varphi_i$ may be a reward basis function $\varphi_i(s)$ that depends only on a state s. In this case, the distribution $R_E$ is distribution $R_E(s)$ that depends only on the state s.

The correcting section 207 supplies, to the learning section 203, the reinforcement learning model in which the reward function has been corrected, and supplies the corrected reward function to the display control section 204.

(Example of Environment Map on which Reward Function Information Has Been Superimposed)

FIG. 11 is a diagram depicting an example of the environment map on which the reward function information of the reward function in the reinforcement learning model before correction by the correcting section 207 has been superimposed.

As depicted in FIG. 11, in a case where the environment map 50 in FIG. 3 has been generated, the display control section 204 generates reward function information 221 (a reward value map). Using a color, a pattern, or the like, the reward function information 221 depicts a reward value of each grid on the basis of the reward function in the reinforcement learning model before correction by the correcting section 207. Then, the display control section 204 superimposes the reward function information 221 on the environment map 50 and causes the display section 15 to display the reward function information 221 superimposed on the environment map 50.

In the example in FIG. 11, a reward value of a grid corresponding to the goal 34 is positive while reward values of the other grids are zero. Therefore, the reward function information 221 is a GUI image in which the color of the grid corresponding to the goal 34 (gray in the example in FIG. 11) is different from the color of the other grids (transparent color in the example in FIG. 11).

(Description of Method of Teaching Reward Function)

FIG. 12 is a diagram for describing a method of teaching the reward function with respect to the reward function information 221 in FIG. 11.

In a case where the reward function information 221 has been superimposed on the environment map 50 as depicted in FIG. 11, the user inputs a negative reward value $-r_1$ for each grid in a region 241 of the obstacle 35 as depicted in FIG. 12, for example. Further, the user inputs a negative reward value $-r_2$ for each grid in a region 242. The region 242 is located on the side opposite to the goal 34 in the vertical direction with respect to the agent 31.

As described above, the user teaches, as a desired reward function, the reward function in which the reward value of the grid corresponding to the goal 34 is positive, the reward value of each grid in the region 241 is the reward value $-ri$, and the reward value of each grid in the region 242 is the reward value $-r_2$.

In this case, the correcting section 207 corrects the reward function in the reinforcement learning model so as to approximate the reward function taught by the user on the basis of the reward value $-r_1$ of each grid in the region 241 and the reward value $-r_2$ of each grid in the region 242. Then, the correcting section 207 supplies the corrected reward function to the display control section 204. The display control section 204 generates reward function information of the reward function supplied from the correcting section 207. The display control section 204 superimposes the reward function information on the environment map 50 and causes the display section 15 to display the reward function information superimposed on the environment map 50.

(Description of Processes of PC)

FIG. 13 is a flowchart for describing a movement policy learning process of the PC 200 in FIG. 10.

Since processes in steps S131 to S139 in FIG. 13 are similar to the processes in steps S31 to S39 in FIG. 8, respectively, description will be omitted.

In step S140, the learning section 203 optimizes the reinforcement learning model supplied from the initialization section 12 or the correcting section 207 according to the optimization method selected in step S139, and learns the movement policy on the basis of the optimized reinforcement learning model. The learning section 203 supplies the optimized reinforcement learning model to the correcting section 207 and supplies the reward function in the optimized reinforcement learning model to the display control section 204.

In step S141, the display control section 204 generates reward function information on the basis of the reward function supplied from the learning section 203, and superimposes the reward function information on the environment map.

In step S142, the display control section 204 supplies the environment map on which the reward function information has been superimposed to the display section 15, and causes the display section 15 to display the environment map.

In step S143, the receiving section 206 determines whether or not the user who has seen the reward function information displayed on the display section 15 has taught reward function information with respect to the reward function information. In a case where it has been determined in step S143 that the reward function information has been taught, the receiving section 206 receives grid-based reward values as teaching of the reward function information, supplies the reward values to the correcting section 207, and causes the process to proceed to step S144.

In step S144, the correcting section 207 performs a correction process of correcting the reinforcement learning model supplied from the learning section 203 on the basis of the grid-based reward values supplied from the receiving section 206. The details of this correction process will be described with reference to FIG. 14 described later.

In step S145, the PC 200 determines whether or not to end the process, similarly to the process in step S45. In a case where it has been determined in step S145 that the process ends, the learning section 203 outputs the current movement policy as a final learning result and ends the process.

On the other hand, in a case where it has been determined in step S145 that the process does not end, the process returns to step S140. Further, in a case where it has been determined that the reward function has not been taught in step S143, the process returns to step S140.

It is noted that the process in the first step S140 may be started in a case where the user has given an instruction to start optimization.

FIG. 14 is a flowchart for describing the correction process in step S144 in FIG. 13.

In step S151 in FIG. 14, the correcting section 207 solves a regression problem for approximating the distribution of the current reward values by using a reward function model according to various inverse reinforcement learning methods. The current reward values have been updated with the reward values supplied from the receiving section 206. The reward function model includes n reward basis functions $\varphi_1(s, a)$ to $\varphi_n(s, a)$. In this manner, the reward function in the reinforcement learning model is corrected. The correcting section 207 supplies the corrected reward function to the display control section 204.

In step S152, the display control section 204 generates reward function information on the basis of the reward function supplied from the correcting section 207, and superimposes the reward function information on the environment map.

In step S153, the display control section 204 supplies the environment map on which the reward function information has been superimposed to the display section 15, and causes the display section 15 to display the environment map.

In step S154, the correcting section 207 determines whether or not to add, as a reward basis function $\varphi_{n+1}(s, a)$, a reward basis function among a reward basis function group registered in advance. The reward basis function is not any of the n reward basis functions $\varphi_1(s, a)$ to $\varphi_n(s, a)$ used in the corrected reinforcement learning model.

For example, the correcting section 207 sequentially adds, as the reward basis function $\varphi_{n+1}(s, a)$, each reward basis function other than the reward basis functions $\varphi_1(s, a)$ to $\varphi_n(s, a)$ among the reward basis function group registered in advance. Then, the correcting section 207 uses the equation (2) described above to approximate the reward function to which the reward basis function $\varphi_{n+1}(s, a)$ has been added, and uses the following equation (3) to calculate an absolute value D (distance scale) of a residual between the approximated reward function and reward distribution $R_E$.
[Math. 3]

$$D = \| R_E - w^T \phi \| \qquad\qquad \cdots (3)$$

In a case where there is at least one reward basis function $\varphi_{n+1}(s, a)$ with which the absolute value D decreases (improves) compared to the absolute value D before addition, the correcting section 207 determines, in a step S154, to add the reward basis function $\varphi_{n+1}(s, a)$ with which the absolute value D is smallest. On the other hand, in a case where there is no reward basis function $\varphi_{n+1}(s, a)$ with which the absolute value D decreases compared to the absolute value D before addition, the correcting section 207 determines, in step S154, not to add any reward basis function $\varphi_{n+1}(s, a)$.

In a case where it has been determined in step S154 that the reward basis function $\varphi_{n+1}(s, a)$ is added, the process proceeds to step S155. Since processes in steps S155 and S156 are similar to the processes in steps S55 and S56 in FIG. 9, respectively, description will be omitted.

In step S157, similarly to the step S151, the correcting section 207 solves the regression problem for approximating the distribution of the current reward values, which have been updated with the reward values supplied from the receiving section 206, by using the reward function model to which the reward basis function $\varphi_{n+1}(s, a)$ has been added. In this manner, the reward function in the reinforcement learning model is corrected. The correcting section 207 supplies, to the learning section 203, the reinforcement learning model in which the reward function has been corrected, and supplies the corrected reward function to the display control section 204.

Since processes in steps S158 and S159 are similar to the processes in steps S152 and S153, respectively, description will be omitted. After the process in step S159, the process returns to step S144 in FIG. 13 and proceeds to step S145.

On the other hand, in a case where it has been determined in step S154 that the reward basis function $\varphi_{n+1}(s, a)$ is not added or in a case where it has been determined in step S156 that no input for selecting addition of the reward basis function $\varphi_{n+1}(s, a)$ has been made, the reward basis function $\varphi_{n+1}(s, a)$ is not added. Then, the correcting section 207 supplies the reinforcement learning model corrected in step S151 to the learning section 203, returns the process to step S144 in FIG. 13, and causes the process to proceed to step S145.

It is noted that, before the process in step S154, the correcting section 207 may determine whether or not the distance scale between the reward function corrected in step S151 and the distribution of the current reward values updated with the reward values taught by the user is greater than a threshold value. In a case where the distance scale is greater than the threshold value, the correcting section 207 may cause the process to proceed to step S154. In this case, when the distance scale is equal to or less than the threshold value, the reward basis function $\varphi_{n+1}(s, a)$ is not added and the correcting section 207 supplies the reinforcement learning model corrected in step S151 to the learning section 13, returns the process to step S144 in FIG. 13, and causes the process to proceed to step S145.

As described above, the PC 200 causes the display section 15 to display the reward function information. Therefore, the user can recognize the reward function by viewing the reward function information displayed on the display section 15. Accordingly, while viewing the reward function information, the user can intuitively teach a reward function that causes the agent to take an action to be taken and indirectly and easily correct the reinforcement learning model through the GUI. That is, the user can indirectly and easily correct the reinforcement learning model by interacting with the PC 200. This, as a result, makes it possible to prevent learning with the reinforcement learning model using the reward function that is considered apparently inappropriate by the user. Thus, it is possible to improve the movement policy and optimize the reinforcement learning model efficiently.

It is noted that, in the first and second embodiments, the display section 15 and the receiving section 16 (receiving section 206) may be integrated with each other to form a touch panel. In this case, the receiving section 16 receives input of the user's operation on the touch panel. For example, in the second embodiment, the user performs a pinch-in/pinch-out operation or the like to a region to which a reward value is input in the environment map on the touch panel, thereby correcting (increasing or decreasing) the reward value in the region and inputting the corrected reward value.

Further, while the environment map in the first and second embodiments is the GUI image that is a bird's eye view of the surrounding environment of the agent, the environment map may be a GUI image viewed from the agent. In this case, the agent is not included in the environment map.

In addition, while the environment map in the first and second embodiments is the GUI image depicting the surrounding environment in two dimensions, the environment map may be a GUI image depicting the surrounding environment in one or three dimensions.

Further, in the above description, the policy information is superimposed on the environment map in the PC 10 to which the movement policy is taught, while the reward function information is superimposed on the environment map in the PC 200 to which the reward function is taught. However, the teaching contents and the superimposed contents do not need to correspond to each other. That is, the PC 10 may superimpose the reward function information on the environment map, while the PC 200 may superpose the policy information on the environment map. In this case, the user of the PC 10 teaches the policy information while viewing the environment map on which the reward function information has been superimposed. The user of the PC 200 teaches the reward function while viewing the environment map on which the policy information has been superimposed.

<Third Embodiment>

(Example of Environment Map on which Policy Information Has Been Superimposed)

The configuration of one embodiment of a VR device as a learning apparatus to which the present disclosure is applied is similar to the configuration of the PC 10 in FIG. 1, except that an agent always exists in a virtual world and the display section 15 is a head-mounted display mounted on the head of the user. Therefore, description of each section of the VR device will be made using each section of the PC 10 in FIG. 1. The VR device provides experience of the virtual world viewed from the agent.

FIG. 15 is a diagram depicting an example of an environment map on which policy information of a movement policy learned by the reinforcement learning model before correction by the correcting section 17 has been superimposed. The environment map is displayed on the display section 15 of such a VR device.

As depicted in FIG. 15, an environment map 260 displayed on the display section 15 of the VR device is a GUI image depicting a surrounding environment viewed from the agent in three dimensions. In the example in FIG. 15, walls 261 to 263 exist in front of, to the left, and to the right of the agent. A space closer to the agent than to the walls 261 to 263 is a movable region 264. Further, an obstacle 265 that is an obstacle to the movement of the agent exists in the movable region 264. A goal 266 exists on the side opposite to the agent across the obstacle 265 in the movable region 264. A positive reward value is set in the goal 266.

It is noted that, in the example in FIG. 15, the environment map 260 is viewed from the agent, and the agent itself does not exist in the environment map 260. Alternatively, the environment map 260 may be viewed from slightly behind the agent and may include the back or the like of the agent.

As depicted in FIG. 15, in a case where the environment map 260 has been generated, the display control section 14 generates policy information 281. Using an arrow, the policy information 281 indicates a movement path based on the movement policy from the current position of the agent to the goal 266. The movement policy has been learned by the reinforcement learning model before correction by the correcting section 17. Then, the display control section 14 superimposes the policy information 281 on the environment map 260 and causes the display section 15 to display the policy information 281 superimposed on the environment map 260. It is noted that contour-line images may also be superimposed on the environment map 260 in FIG. 15, as in the case of FIG. 4.

The obstacle 265 is an obstacle to the movement. However, since the obstacle 265 exists in the movable region 264, there is a possibility that the movement path based on the movement policy learned by the reinforcement learning model before correction is a path that passes through the obstacle 265, as depicted in FIG. 15.

In such a case, for example, the user inputs a movement path 282 by operating a controller, not depicted. The movement path 282 is a path extending from the current position of the agent to the goal 266 without passing through the obstacle 265, as depicted in FIG. 15. In this manner, the user teaches the movement policy corresponding to the movement path 282 as a desired movement policy.

It is noted that the configuration of the VR device as the learning apparatus to which the present disclosure is applied can also be similar to the configuration of the PC 200 in FIG. 10.

In the VR device, the receiving section 16 (receiving section 206) may include a gaze detecting section that continuously detects the gaze direction of the user mounting the display section 15 on the head. The gaze detecting section may receive input of a movement path for moving in the gaze direction of the user. Further, the receiving section 16 (receiving section 206) may include a motion detecting section that detects the motion of the user. The motion detecting section may receive input of a movement path according to the motion of the user.

Further, the PC 10 (PC 200) and the receiving section 16 (receiving section 206) of the VR device may include a hand gesture detecting section that detects a hand gesture of the user. The hand gesture detecting section may receive input from the user on the basis of a specific hand gesture. In this case, for example, the user inputs a movement path for moving in the right direction by swinging an arm in the right direction while keeping a hand in a specific shape.

In addition, the PC 10 (PC 200) and the receiving section 16 (receiving section 206) of the VR device may include a voice recognition section that recognizes the voice of the user. The voice recognition section may receive input from the user on the basis of the speech of the user.

Further, whether or not to add the reward basis function described above may be determined using a random sampling method which is inspired by Preference IRL. The details of the Preference IRL are described in "APRIL: Active Preference-learning based Reinforcement Learning," Riad Akrour, Marc Schoenauer, and Mich'ele Sebag, European Conference, ECML PKDD 2012, Bristol, UK, September 24 to 28, 2012. Proceedings, Part II, for example.

In addition, in the above description, the reward basis function to be added to the reinforcement learning model is selected from the reward basis function group registered in advance. However, the reward basis function may be a new reward basis function other than the reward basis function group registered in advance.

Further, the contents of the processes performed in the PC 10 (PC 200) and the VR device may be stored in a database, not depicted, so as to make the processes reproducible.

The PC 10 (PC 200) and the VR device correct the reinforcement learning model on the basis of input from the user in various surrounding environments. Thus, the PC 10 (PC 200) and the VR device are capable of learning a robust movement policy in the corrected reinforcement learning model.

<Fourth Embodiment>

(Description of Computer to which Present Disclosure Is Applied)

The series of processes described above can be executed by hardware or software. In a case where the series of processes is executed by software, a program constituting the software is installed in a computer. Here, the computer includes a computer incorporated in dedicated hardware, a general-purpose personal computer, for example, that is capable of executing various functions by installing various programs, and the like.

FIG. 16 is a block diagram depicting an example of a configuration of hardware of a computer in which a program executes the series of processes described above.

In a computer 400, a CPU (Central Processing Unit) 401, a ROM(Read Only Memory) 402, and a RAM (Random Access Memory) 403 are mutually connected to each other via a bus 404.

In addition, an input/output interface 405 is connected to the bus 404. An input section 406, an output section 407, a storage section 408, a communication section 409, and a drive 410 are connected to the input/output interface 405.

The input section 406 includes a keyboard, a mouse, a microphone, and the like. The output section 407 includes a display, a speaker, and the like. The storage section 408 includes a hard disk, a nonvolatile memory, and the like. The communication section 409 includes a network interface and the like. The drive 410 drives a removable medium 411 such as a magnetic disk, an optical disk, a magneto-optical disk, or a semiconductor memory.

In the computer 400 configured as described above, for example, the CPU 401 loads the program stored in the storage section 408 into the RAM 403 via the input/output interface 405 and the bus 404 and executes the program, whereby the series of processes described above is performed.

The program to be executed by the computer 400 (CPU 401) can be recorded and provided on the removable medium 411 as a package medium or the like, for example. Further, the program can be provided via a wired or wireless transmission medium such as a local area network, the Internet, or digital satellite broadcasting.

In the computer 400, the program can be installed in the storage section 408 via the input/output interface 405 by attaching the removable medium 411 to the drive 410. Further, the program can be received by the communication section 409 via a wired or wireless transmission medium and installed in the storage section 408. Additionally, the program can be installed in the ROM 402 or the storage section 408 in advance.

It is noted that the program to be executed by the computer 400 may be a program that performs the processes in chronological order in the order described in the present specification or may be a program that performs the processes in parallel or at necessary timing such as on occasions of calls.

Further, the effects described in the present specification are merely examples and not limitative, and other effects may be provided.

The embodiments of the present disclosure are not limited to the embodiments described above, and various modifications can be made without departing from the gist of the present disclosure.

For example, the present disclosure can be configured as cloud computing in which one function is shared and processed in cooperation by a plurality of apparatuses through a network.

Further, each of the steps described in the flowcharts described above can not only be executed by one apparatus but also be shared and executed by a plurality of apparatuses.

In addition, in a case where a plurality of processes is included in one step, the plurality of processes included in the one step can not only be executed by one apparatus but also be shared and executed by a plurality of apparatuses.

Further, the present disclosure can also be applied to a learning apparatus that performs reinforcement learning of a policy of an action other than movement. Examples of the action other than movement include warning such as horning of a vehicle as an agent, indirect indication of intention such as a turn signal to another agent, a combination of these actions and movement, and the like.

In addition, the present disclosure can also be applied to a learning apparatus that performs reinforcement learning of policies of a plurality of agents (multiple agents) at a time. In this case, a movement policy and a reward function are taught for each agent after an agent is specified.

It is noted that the present disclosure can also be configured as follows.

(1) A learning apparatus including:

a display control section configured to cause a display section to display reinforcement learning model information regarding a reinforcement learning model; and

a correcting section configured to correct the reinforcement learning model on a basis of user input to the reinforcement learning model information.

(2) The learning apparatus according to (1), in which the reinforcement learning model information includes policy information indicating a policy learned by the reinforcement learning model.

(3) The learning apparatus according to (1), in which the reinforcement learning model information includes reward function information indicating a reward function used in the reinforcement learning model.

(4) The learning apparatus according to any one of (1) to (3), in which the user input includes teaching of a policy.

(5) The learning apparatus according to (4), in which, in a case where an objective function is improved by adding a basis function of a reward function used in the reinforcement learning model, the correcting section adds the basis function of the reward function.

(6) The learning apparatus according to any one of (1) to (3), in which the user input includes teaching of a reward function.

(7) The learning apparatus according to (6), in which, in a case where a difference between the reward function taught as the user input and a reward function of the reinforcement learning model corrected on the basis of the user input is decreased by adding a basis function of the reward function used in the reinforcement learning model, the correcting section adds the basis function of the reward function.

(8) The learning apparatus according to any one of (1) to (7), in which the display control section superimposes the reinforcement learning model information on environment information indicating an environment and causes the display section to display the reinforcement learning model information superimposed on the environment information.

(9) A learning method including:

a display control step of a learning apparatus causing a display section to display reinforcement learning model information regarding a reinforcement learning model; and

a correcting step of the learning apparatus correcting the reinforcement learning model on a basis of user input to the reinforcement learning model information.

[Reference Signs List]

10 PC, 14 Display control section, 15 Display section, 17 Correcting section, 71 Policy information, 50 Environment map, 200 PC, 204 Display control section, 207 Correcting section, 221 Reward function information, 260 Environment map, 281 Policy information

**Claims**

**1.** A learning apparatus comprising:

a display control section configured to cause a display section to display reinforcement learning model information regarding a reinforcement learning model; and

a correcting section configured to correct the reinforcement learning model on a basis of user input to the reinforcement learning model information.

**2.** The learning apparatus according to claim 1, wherein the reinforcement learning model information includes policy information indicating a policy learned by the reinforcement learning model.

**3.** The learning apparatus according to claim 1, wherein the reinforcement learning model information includes reward function information indicating a reward function used in the reinforcement learning model.

**4.** The learning apparatus according to claim 1, wherein the user input includes teaching of a policy.

**5.** The learning apparatus according to claim 4, wherein, in a case where an objective function is improved by adding a basis function of a reward function used in the reinforcement learning model, the correcting section adds the basis function of the reward function.

6. The learning apparatus according to claim 1, wherein the user input includes teaching of a reward function.

7. The learning apparatus according to claim 6, wherein, in a case where a difference between the reward function taught as the user input and a reward function of the reinforcement learning model corrected on the basis of the user input is decreased by adding a basis function of the reward function used in the reinforcement learning model, the correcting section adds the basis function of the reward function.

8. The learning apparatus according to claim 1, wherein the display control section superimposes the reinforcement learning model information on environment information indicating an environment and causes the display section to display the reinforcement learning model information superimposed on the environment information.

9. A learning method comprising:

a display control step of a learning apparatus causing a display section to display reinforcement learning model information regarding a reinforcement learning model; and
a correcting step of the learning apparatus correcting the reinforcement learning model on a basis of user input to the reinforcement learning model information.

FIG.1

FIG.2

EP 3 561 740 A1

# FIG.3

EP 3 561 740 A1

FIG.4

# FIG.5

EP 3 561 740 A1

CURRENT MOVEMENT POLICY

TAUGHT MOVEMENT POLICY

MOVEMENT PREDICTION DISTRIBUTION CALCULATED FROM CURRENT MOVEMENT POLICY

# FIG.6

TAUGHT MOVEMENT POLICY

(CORRECTED) CURRENT MOVEMENT POLICY

(CORRECTED) MOVEMENT PREDICTION DISTRIBUTION CALCULATED FROM CURRENT MOVEMENT POLICY

FIG.7

# FIG.8

```
( START MOVEMENT POLICY LEARNING PROCESS )
                    │
                    ▼
              ╱─────────────╲         S31
             ╱ DOES AGENT EXIST IN ╲      NO
             ╲  VIRTUAL WORLD?     ╱──────────────┐
              ╲─────────────╱                     ▼
                    │YES                  ┌──────────────────────┐ S34
                    ▼                     │ OBTAIN DATA OBSERVED BY│
        ┌─────────────────────────┐S32   │   VARIOUS SENSORS      │
        │OBTAIN OPERATION ENVIRONMENT FILE AND THE LIKE│         │
        └─────────────────────────┘      └──────────────────────┘
                    │                               │         S35
                    ▼                     ┌──────────────────────┐
        ┌─────────────────────────┐S33   │ GENERATE ENVIRONMENT MAP OF│
        │ BUILD SURROUNDING ENVIRONMENT  │SURROUNDING ENVIRONMENT OF AGENT│
        │   OF AGENT IN VIRTUAL WORLD │  └──────────────────────┘
        └─────────────────────────┘                 │
                    │◄───────────────────────────────┘
                    ▼
        ┌─────────────────────────┐S36
        │CAUSE ENVIRONMENT MAP TO BE DISPLAYED│
        └─────────────────────────┘
                    │◄──────────────────────┐
                    ▼                        │
              ╱─────────────╲  S37           │
             ╱ HAS INITIAL VALUE OF VALUE ╲  NO
             ╲ FUNCTION OR MOVEMENT       ╱──┘
              ╲ POLICY BEEN INPUT?       ╱
                    │YES
                    ▼
        ┌─────────────────────────┐S38
        │ INITIALIZE REINFORCEMENT LEARNING MODEL│
        └─────────────────────────┘
                    │
                    ▼
        ┌─────────────────────────┐S39
        │SELECT METHOD FOR OPTIMIZING REINFORCEMENT LEARNING MODEL│
        └─────────────────────────┘
                    │◄──────────────────────┐
                    ▼                        │
        ┌─────────────────────────┐S40       │
        │ OPTIMIZE REINFORCEMENT LEARNING    │
        │ MODEL AND LEARN MOVEMENT POLICY    │
        └─────────────────────────┘          │
                    │                         │
                    ▼                         │
        ┌─────────────────────────┐S41        │
        │GENERATE POLICY INFORMATION AND CONTOUR-LINE IMAGES│
        └─────────────────────────┘           │
                    │                          │
                    ▼                          │
        ┌─────────────────────────┐S42         │
        │CAUSE ENVIRONMENT MAP ON WHICH POLICY INFORMATION AND│
        │CONTOUR-LINE IMAGES HAVE BEEN SUPERIMPOSED TO BE DISPLAYED│
        └─────────────────────────┘            │
                    │                           │
                    ▼                           │
              ╱─────────────╲  S43              │
             ╱ HAS MOVEMENT POLICY BEEN ╲   NO  │
             ╲      TAUGHT?           ╱─────────┘
              ╲─────────────╱
                    │YES
                    ▼
        ┌─────────────────────────┐S44
        │ CORRECTION PROCESS      │
        └─────────────────────────┘
                    │
                    ▼
              ╱─────────────╲  S45
             ╱  END PROCESS?  ╲   NO
             ╲              ╱────────────────►
              ╲─────────────╱
                    │YES
                    ▼
              (  END  )
```

# FIG.9

```
            ( START CORRECTION PROCESS )
                         │
                         ▼
┌─────────────────────────────────────────────────────┐   S51
│ SOLVE POLICY OPTIMIZATION PROBLEM OF REINFORCEMENT   │
│ LEARNING MODEL ON THE BASIS OF MOVEMENT PATH         │
└─────────────────────────────────────────────────────┘
                         │
                         ▼
┌─────────────────────────────────────────────────────┐   S52
│ GENERATE POLICY INFORMATION AND CONTOUR-LINE         │
│ IMAGES ON THE BASIS OF MOVEMENT POLICY               │
└─────────────────────────────────────────────────────┘
                         │
                         ▼
┌─────────────────────────────────────────────────────┐   S53
│ CAUSE ENVIRONMENT MAP ON WHICH POLICY INFORMATION AND│
│ CONTOUR-LINE IMAGES HAVE BEEN SUPERIMPOSED TO BE DISPLAYED│
└─────────────────────────────────────────────────────┘
                         │
                         ▼
                  S54
         < ADD REWARD BASIS FUNCTION? >──── NO ────┐
                         │                         │
                        YES                        │
                         ▼                         │
┌─────────────────────────────────────────────────────┐   S55
│ CAUSE SELECTION SCREEN FOR SELECTING WHETHER OR     │   │
│ NOT TO ADD REWARD BASIS FUNCTION TO BE DISPLAYED    │   │
└─────────────────────────────────────────────────────┘   │
                         │                         │
                         ▼                         │
                  S56                              │
      < HAS INPUT FOR SELECTING ADDITION OF >─ NO ─┤
      < REWARD BASIS FUNCTION BEEN MADE? >         │
                         │                         │
                        YES                        │
                         ▼                         │
┌─────────────────────────────────────────────────────┐   S57
│ SOLVE, ON THE BASIS OF MOVEMENT PATH, POLICY        │   │
│ OPTIMIZATION PROBLEM OF REINFORCEMENT LEARNING      │   │
│ MODEL TO WHICH REWARD BASIS FUNCTION HAS BEEN ADDED │   │
└─────────────────────────────────────────────────────┘   │
                         │                         │
                         ▼                         │
┌─────────────────────────────────────────────────────┐   S58
│ GENERATE POLICY INFORMATION AND CONTOUR-LINE       │   │
│ IMAGES ON THE BASIS OF MOVEMENT POLICY             │   │
└─────────────────────────────────────────────────────┘   │
                         │                         │
                         ▼                         │
┌─────────────────────────────────────────────────────┐   S59
│ CAUSE ENVIRONMENT MAP ON WHICH POLICY INFORMATION AND│  │
│ CONTOUR-LINE IMAGES HAVE BEEN SUPERIMPOSED TO BE DISPLAYED│
└─────────────────────────────────────────────────────┘   │
                         │◄────────────────────────┘
                         ▼
                   ( RETURN )
```

# FIG.10

FIG.11

EP 3 561 740 A1

# FIG.12

REGION TO WHICH REWARD VALUE $-r_1$ IS TAUGHT

REGION TO WHICH REWARD VALUE $-r_2$ IS TAUGHT

EP 3 561 740 A1

EP 3 561 740 A1

# FIG.13

START MOVEMENT POLICY LEARNING PROCESS

S131
DOES AGENT EXIST IN VIRTUAL WORLD? — NO

YES

OBTAIN OPERATION ENVIRONMENT FILE AND THE LIKE S132

BUILD SURROUNDING ENVIRONMENT OF AGENT IN VIRTUAL WORLD S133

OBTAIN DATA OBSERVED BY VARIOUS SENSORS S134

GENERATE ENVIRONMENT MAP OF SURROUNDING ENVIRONMENT OF AGENT S135

CAUSE ENVIRONMENT MAP TO BE DISPLAYED S136

S137
HAS INITIAL VALUE OF VALUE FUNCTION OR MOVEMENT POLICY BEEN INPUT? — NO

YES

INITIALIZE REINFORCEMENT LEARNING MODEL S138

SELECT METHOD FOR OPTIMIZING REINFORCEMENT LEARNING MODEL S139

OPTIMIZE REINFORCEMENT LEARNING MODEL AND LEARN MOVEMENT POLICY S140

GENERATE REWARD FUNCTION INFORMATION S141

CAUSE ENVIRONMENT MAP ON WHICH REWARD FUNCTION INFORMATION HAS BEEN SUPERIMPOSED TO BE DISPLAYED S142

S143
HAS REWARD FUNCTION BEEN TAUGHT? — NO

YES

CORRECTION PROCESS S144

S145
END PROCESS? — NO

YES

END

28

# FIG.14

```
                 ( START CORRECTION PROCESS )
                              │
                              ▼
        ┌───────────────────────────────────────────┐  S151
        │  SOLVE REGRESSION PROBLEM FOR APPROXIMATING │
        │    DISTRIBUTION OF UPDATED REWARD VALUES    │
        └───────────────────────────────────────────┘
                              │
                              ▼
        ┌───────────────────────────────────────────┐  S152
        │     GENERATE REWARD FUNCTION INFORMATION    │
        │       ON THE BASIS OF REWARD FUNCTION       │
        └───────────────────────────────────────────┘
                              │
                              ▼
        ┌───────────────────────────────────────────┐  S153
        │ CAUSE ENVIRONMENT MAP ON WHICH REWARD FUNCTION │
        │ INFORMATION HAS BEEN SUPERIMPOSED TO BE DISPLAYED │
        └───────────────────────────────────────────┘
                              │
                              ▼
                        ◇ S154
              ADD REWARD BASIS FUNCTION? ── NO ──┐
                              │                   │
                             YES                  │
                              ▼                   │
        ┌───────────────────────────────────────────┐  S155   │
        │ CAUSE SELECTION SCREEN FOR SELECTING WHETHER OR │     │
        │ NOT TO ADD REWARD BASIS FUNCTION TO BE DISPLAYED │    │
        └───────────────────────────────────────────┘         │
                              │                                 │
                              ▼                                 │
                        ◇ S156                                  │
              HAS INPUT FOR SELECTING                           │
              ADDITION OF REWARD BASIS ── NO ───────────────────┤
              FUNCTION BEEN MADE?                               │
                              │                                 │
                             YES                                │
                              ▼                                 │
        ┌───────────────────────────────────────────┐  S157    │
        │  SOLVE REGRESSION PROBLEM FOR APPROXIMATING │         │
        │  DISTRIBUTION OF REWARD VALUES, TO WHICH REWARD │     │
        │  VALUES HAVE BEEN ADDED, BY USING REWARD FUNCTION │   │
        │  MODEL TO WHICH REWARD BASIS FUNCTION HAS BEEN ADDED │ │
        └───────────────────────────────────────────┘         │
                              │                                 │
                              ▼                                 │
        ┌───────────────────────────────────────────┐  S158    │
        │  GENERATE REWARD FUNCTION INFORMATION ON THE │        │
        │        BASIS OF REWARD FUNCTION            │          │
        └───────────────────────────────────────────┘         │
                              │                                 │
                              ▼                                 │
        ┌───────────────────────────────────────────┐  S159    │
        │ CAUSE ENVIRONMENT MAP ON WHICH REWARD FUNCTION │      │
        │ INFORMATION HAS BEEN SUPERIMPOSED TO BE DISPLAYED │   │
        └───────────────────────────────────────────┘         │
                              │◄────────────────────────────────┘
                              ▼
                        ( RETURN )
```

# FIG.15

262   266   261   264   263

266

264

263

262

CURRENT
MOVEMENT POLICY

TAUGHT
MOVEMENT POLICY

265   281   282   260

EP 3 561 740 A1

# FIG.16

EP 3 561 740 A1

**EP 3 561 740 A1**

## INTERNATIONAL SEARCH REPORT

| | International application No. |
|---|---|
| | PCT/JP2017/044839 |

**A.  CLASSIFICATION OF SUBJECT MATTER**
Int.Cl.  G06N99/00(2010.01)i

According to International Patent Classification (IPC) or to both national classification and IPC

**B.  FIELDS SEARCHED**

Minimum documentation searched (classification system followed by classification symbols)
Int.Cl.  G06N99/00

Documentation searched other than minimum documentation to the extent that such documents are included in the fields searched
Published examined utility model applications of Japan          1922–1996
Published unexamined utility model applications of Japan        1971–2018
Registered utility model specifications of Japan                1996–2018
Published registered utility model applications of Japan        1994–2018

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| X<br>Y<br>A | 野川博司、外1名，自律的な行動学習を利用した教示の意味学習，第3回情報科学技術フォーラム一般講演論文集 第2分冊，  20 August 2004, pp. 319-321, in particular, p. 320, right column, line 10 to page 321, left column, line 1, ("F-045 Learning the meaning of instructions using autonomous action learning"), non-official translation (NOGAWA, Hiroshi et al., separate volume of 3th the Institute of Electronics, Information and Communication Engineers Information and Systems Society, Information Processing Society of Japan) | 1-2, 4, 6, 8-9<br>3<br>5, 7 |
| X<br>Y<br>A | JP 2013-30278 A (HITACHI HIGH-TECHNOLOGIES CORP.) 07 February 2013, paragraphs [0054], [0070]-[0073], fig. 14, 18 & US 2014/0231666 A1, paragraphs [0080], [0096]-[0100], fig. 14, 18 & DE 112012002805 T5 & CN 103718267 A | 1-2, 4, 6, 9<br>3<br>5, 7-8 |

☒  Further documents are listed in the continuation of Box C.      ☐  See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>23 February 2018 (23.02.2018) | Date of mailing of the international search report<br>06 March 2018 (06.03.2018) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

# EP 3 561 740 A1

**INTERNATIONAL SEARCH REPORT**

| International application No. |
|---|
| PCT/JP2017/044839 |

C (Continuation).   DOCUMENTS CONSIDERED TO BE RELEVANT

| Category* | Citation of document, with indication, where appropriate, of the relevant passages | Relevant to claim No. |
|---|---|---|
| Y | 田丸順基、外1名，繰り返し状態系列から時刻依存の報酬関数を推定する逆強化学習の提案，電気学会研究会資料， 24 November 2013, ST-13-117, pp. 7-12, in particular, p. 8, right column, line 10 to p. 11, right column, line 4, (TAMARU, Junki et al., "Inverse reinforcement learning to estimate a time-dependent reward function from cyclic sequences of states", The papers of Technical Meeting on Intelligent Transport Systems) | 3 |

Form PCT/ISA/210 (continuation of second sheet) (January 2015)

33

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BRIAN D. ZIEBART ; ANDREW MAAS ; J.ANDREW BAGNELL ; ANIND K. DEY.** Maximum Entropy Inverse Reinforcement Learning. the Association for the Advancement of Artificial Intelligence (AAAI), 13 July 2008

- **RIAD AKROUR ; MARC SCHOENAUER ; MICH'ELE SEBAG.** APRIL: Active Preference-learning based Reinforcement Learning. *European Conference, ECML PKDD 2012,* 24 September 2012